# EUROPEAN PATENT APPLICATION

(11) **EP 1 950 952 A2**
(43) Date of publication of application: **30.07.2008**
(21) Application number: 08001046.5
(22) Date of filing: 21.01.2008
(51) Int. Cl.: H04N 5/00, H04N 7/16

(54) **Video image delivering apparatus, video image delivering system, and video image delivering method for delivering video image depending on position**

(30) Priority: 25.01.2007 JP 2007014987
(71) Applicant: NEC Corporation, Minato-ku Tokyo 108-8001 (JP)
(72) Inventor: Tanimoto, Jiro, Tokyo 108-8001 (JP)
(74) Representative: Reeve, Nicholas Edward

(57) **Abstract**

Upon receiving an obtaining instruction from video image delivering apparatus, mobile terminal position obtainer obtains the current position of a mobile terminal, which the instruction instructs it to obtain. Mobile terminal position transmitter transmits the current position information indicating the current position to video image delivering apparatus. When communicator of video image delivering apparatus receives the current position information, CPU decides whether or not the current position indicated by the current position information is within a delivery range of a video image file. If it is decided that the current position is within the delivery range, television-phone controller delivers the video image file to mobile terminal.

## Description

This application is based upon and claims the benefit of priority from Japanese patent application No. 2007-014987, filed on January 25, 2007.

### BACKGROUND OF THE INVENTION

The present invention relates to a video image delivering apparatus, a video image delivering system, and a video image delivering method.

In recent years, a technology has been proposed or implemented which downloads information depending on the current position of a mobile wireless terminal from a server. For example, such a technology has a mobile wireless terminal described in Japanese Patent Laid-Open No. 2005-70863.

When content (video image) is generated, the mobile wireless terminal uploads the content and a current position of the mobile wireless terminal to a server. When a retrieval condition is inputted, the mobile wireless terminal transmits a current position and the retrieval condition to a server to download content depending on the retrieval condition and the current position.

A pull-type service is used for the mobile wireless terminal.

In the pull-type service, a user of the mobile wireless terminal needs to execute an active and complicated operation to download content. For example, the user needs to access a Web site, input a retrieval condition, and select content to be downloaded. In addition, the user needs to install special application software in a mobile terminal to download content, or look at and listen to the downloaded content.

Therefore, even if content is released, as long as the user, who in not interested in the content and also is not knowledgeable to some degree about how to operate mobile terminals, does not try to actively view and listen to the content, the content will not be listened to and viewed. For example, the content is highly likely not to be looked at and listened to by a user such as a child and an aged person who are not good at operating of a mobile terminal.

### SUMMARY OF THE INVENTION

We have appreciated that it would be desirable to provide a video image delivering apparatus, a video image delivering system, and a video image delivering method in which a user can look at and listen to a video image depending on a current position of the mobile terminal even if the user does not execute a complicated operation.
The preferred embodiment of the invention provides a video image delivering apparatus connected to a mobile terminal and to a position managing apparatus for obtaining a current position of the mobile terminal, comprising: a file storage device that stores a video image file; a data storage device that stores delivery range information defining a delivery range of the video image file; a communicator that transmits an obtaining instruction for obtaining a current position of said mobile terminal to said position managing apparatus, and receiving a current position information indicating the current position indicated by the obtaining instruction from the position managing apparatus; a controller that decides whether or not the current position indicated by the current position information is within the delivery range defined by the delivery range information in said data storage device; and a deliver device that delivers the video image file in said file storage device to the mobile terminal if said controller decides that the current position is within the delivery range.

A video image delivering system including a video image delivering apparatus connected to a mobile terminal, and a position managing apparatus connected to the mobile terminal and the video image delivering apparatus, wherein said position managing apparatus includes: a obtain device that obtains a current position instructed by an obtaining instruction when the obtaining instruction for obtaining the current position of said mobile terminal is received from the video image delivering apparatus; and a transmit device that transmits a current position information indicating the current position obtained by said obtain device to the video image delivering apparatus, and the video image delivering apparatus includes: a file storage device that stores a video image file; a data storage device that stores delivery range information defining a delivery range of the video image file; a communicate device that transmits the obtaining instruction to the position managing apparatus, and receiving the current position information from the position managing apparatus; a controller that decides whether or not the current position indicated by the current position information is within the delivery range defined by the delivery range information in said data storage device; and a deliver device that delivers the video image file in the file storage device to the mobile terminal if said controller decides that the current position is within the delivery range.

A video image delivering method executed by a video image delivering apparatus including a file storage device that storages a video image file and a data storage device that stores delivery range information defining a delivery range of the video image file, and connected to a mobile terminal and a position managing apparatus obtaining a current position of the mobile terminal, comprising: transmitting an obtaining instruction for obtaining the current position of the mobile terminal to the position managing apparatus; receiving current position information indicating the current position instructed by the obtaining instruction from the position managing apparatus; deciding whether or not the current position indicated by the current position information is within the delivery range defined by the delivery range information in said data storage device; and delivering the video image file in said file storage device to the mobile terminal if it is decided that the current position is within the delivery range.

A video image delivering method executed by a video image delivering system including a video image delivering apparatus including a file storage device for storing a video image file and a data storage device for storing delivery range information defining a delivery range of the video image file, and connected to a mobile terminal, and a position managing apparatus connected to the mobile terminal and the video image delivering apparatus, comprising: transmitting an obtaining instruction for obtaining a current position of the mobile terminal by the video image delivering apparatus; receiving the obtaining instruction from the video image delivering apparatus by the position managing apparatus; obtaining the current position instructed by the obtaining instruction by the position managing apparatus; transmitting current position information indicating the obtained current position to the video image delivering apparatus by the position managing apparatus; receiving the current position information from the position managing apparatus by the video image delivering apparatus; deciding whether or not the current position indicated by the current position information is within the delivery range defined by the delivery range information in the data storage device; and delivering the video image file in the file storage device to the mobile terminal if it is decided that the current position is within the delivery range.

According to the present invention, if a current position of a mobile terminal is within a delivery range of a video image file, the video image file is delivered to the mobile terminal. Therefore, even if a user does not execute a complicated operation, the user can look at and listen to a video image depending on the current position.

The above and other features, and advantages of the present invention will become apparent from the following description with reference to the accompanying drawings which illustrate examples of the present invention.

### BRIEF DESCRIPTION OF THE DRAWINGS

FIG. 1 is a block diagram illustrating a video image delivering system of an exemplary embodiment of the present invention;
FIG. 2 is a block diagram illustrating a configuration example of a mobile terminal;
FIG. 3 is a block diagram illustrating a configuration example of a video image delivering apparatus and a mobile terminal position managing apparatus;
FIG. 4A is an explanatory diagram illustrating an example of a video image file table;
FIG. 4B is an explanatory diagram illustrating an example of a registered terminal table;
FIG. 5 is a flowchart describing an operation example of a video image delivering system;
FIG. 6 is a flowchart describing another operation example of the video image delivering system; and
FIG. 7 is a flowchart describing yet another operation example of the video image delivering system.

### Detailed Description of the preferred Embodiments

Exemplary embodiments of the present invention will be described below referring to the drawings.

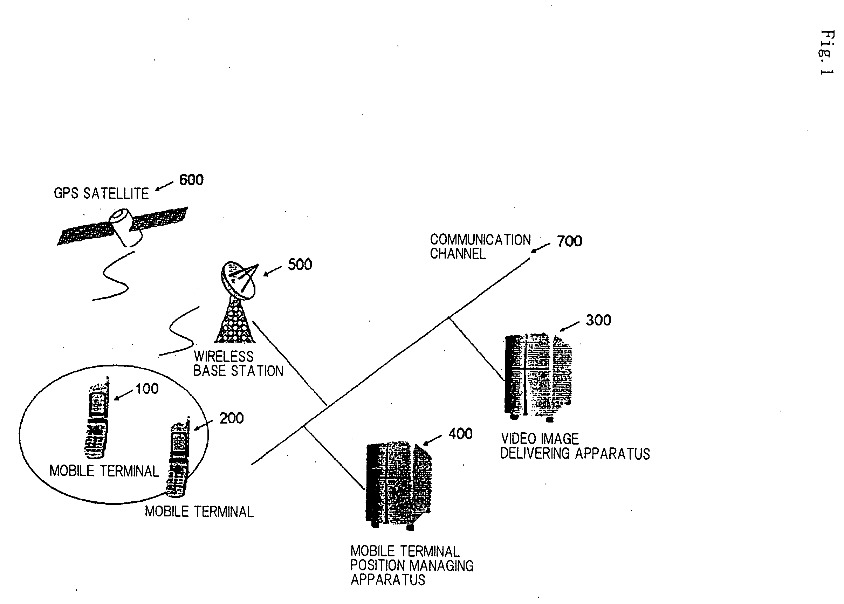

FIG. 1 is a block diagram illustrating a video image delivering system of an exemplary embodiment of the present invention, In FIG. 1, the video image delivering system includes mobile terminals 100 and 200, video image delivering apparatus 300, and mobile terminal position managing apparatus 400.

Mobile terminals 100 and 200 are mutually connected to video image delivering apparatus 300 and mobile terminal position managing apparatus 400 through wireless base station 500 and communication channel 700. In addition, mobile terminals 100 and 200 are connected to GPS satellite 600. Meanwhile, while the number of the mobile terminals is two in FIG. 1, the number is not limited to two, and can be appropriately changed.

Mobile terminals 100 and 200 generate a video image file to register the video image file in video image delivering apparatus 300. Mobile terminals 100 and 200 receive a video image file from video image delivering apparatus 300. Meanwhile, the usage of each mobile terminal may be separated for each mobile terminal, for example, mobile terminal 100 is used to register a video image file, and mobile terminal 200 is used to receive a video image file.

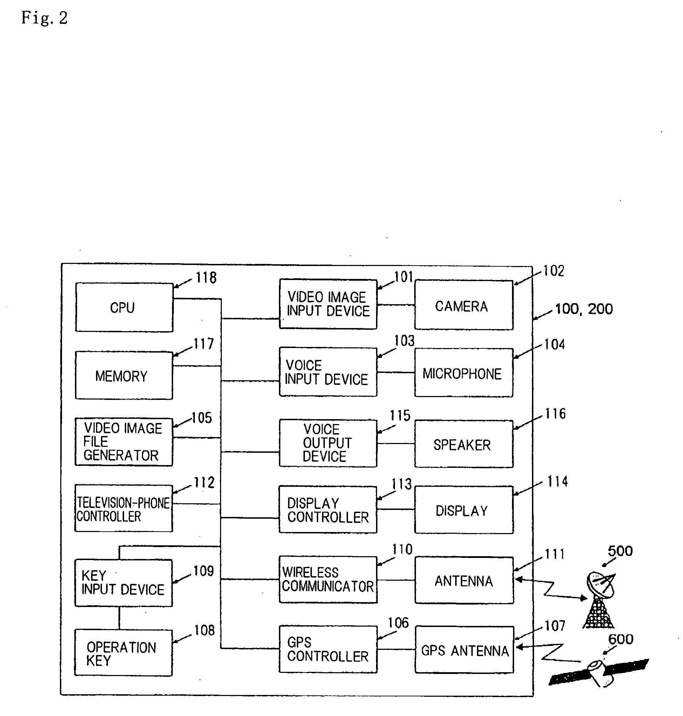

FIG. 2 is a block diagram illustrating a configuration example of mobile terminals 100 and 200. The configurations of mobile terminals 100 and 200 are the same as each other, so that mobile terminal 100 will be described as an example below.

In FIG. 2, mobile terminal 100 includes video image input device 101, camera 102, voice input device 103, microphone 104, video image file generator 105, GPS controller 106, GPS antenna 107, operation key 108, key input device 109, wireless communicator 110, antenna 111, television-phone controller 112, display controller 113, display 114, voice output device 115, speaker 116, memory 117, and CPU 118.

Video image input device 101 controls camera 102 to obtain a video image. Voice input device 103 controls microphone 104 to obtain a voice.

Video image file generator 105 generates a video image file by using the video image obtained by video image input device 101 and the voice obtained by voice input device 103.

GPS controller 106 obtains the current position of mobile terminal 100. Specifically, GPS controller 106 receives an electric wave through GPS antenna 107 from GPS satellite 600, and obtains the current position based on the electric wave. The current position is represented with the longitude and the latitude.

Operation key 108 includes a plurality of keys operated by a user. The user operates (e.g. push down) the plurality of keys of operation key 108 to input a destination and the effective distance in mobile terminal 100.

The destination specifies a mobile terminal which becomes the delivery destination of the video image file. Meanwhile, the user may input a plurality of destinations. When the video image file is delivered to a mobile terminal which is previously registered in video image delivering apparatus 300, the user may not input the destination.

For example, when the mobile terminal is a mobile phone, the destination is a phone number of the mobile phone. Hereinafter, it is assumed that the mobile terminal is a mobile phone, and the destination is a phone number. In addition, the phone number corresponding to the destination is referred to as a destination telephone number.

The effective distance is a distance for defining the delivery range in which the video image file is delivered.

Key input device 109 receives the destination telephone number and the effective distance from the user through operation key 108.

Wireless communicator 110 wirelessly-communicates with wireless base station 500 through antenna 111, and communicates with video image delivering apparatus 300 and mobile terminal position managing apparatus 400.

Specifically, wireless communicator 110 transmits the video image file generated by video image file generator 105, position information indicating the position at which the video image file is generated by video image file generator 105, and the destination telephone number and the effective distance received by key input device 109, to video image delivering apparatus 300. Hereinafter, the position information is referred to as photographing position information.

Wireless communicator 110 receives the video image file by using a television-phone communication method from video image delivering apparatus 300.

Television-phone controller 112 obtains a video image data and a voice data from the video image file which is received by wireless communicator 110.

Display controller 113 displays the video image data obtained by television-phone controller 112 on display 114.

Voice output device 115 outputs the voice data obtained by television-phone controller 112 from speaker 116.

Memory 117 temporarily records the video image file generated by video image file generator 105, the position information obtained by GPS controller 106, and the destination telephone number and the effective distance received by key input device 109.

CPU 118 controls video image input device 101, voice input device 103, video image file generator 105, GPS controller 106, key input device 109, wireless communicator 110, television-phone controller 112, display controller 113, voice output device 115, and memory 117.

Video image delivering apparatus 300 delivers a video image file to mobile terminals 100 and 200. In such a case, video image delivering apparatus 300 delivers the video image file with a push-type service. In the push-type service, even if a user does not access to image delivering apparatus 300, a video image is delivered.

Mobile terminal position managing apparatus 400 obtains position information indicating the current positions of mobile terminals 100 and 200.

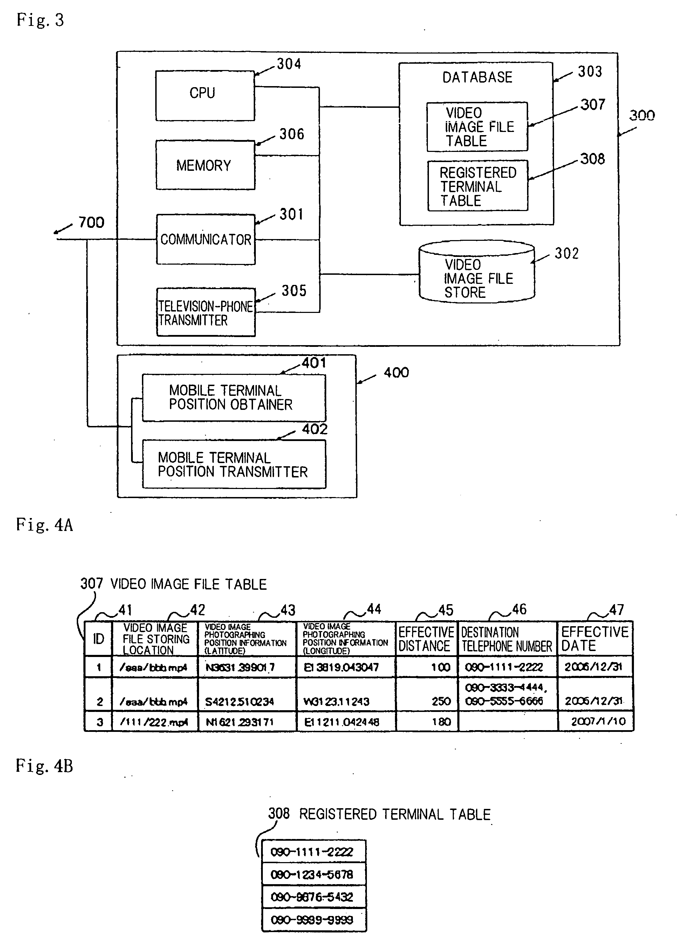

FIG. 3 is a block diagram illustrating a configuration example of video image delivering apparatus 300 and mobile terminal position managing apparatus 400.

In FIG. 3, video image delivering apparatus 300 includes communicator 301, video image file store 302, database 303, CPU 304, television-phone transmitter 305, and memory 306. Mobile terminal position managing apparatus 400 includes mobile terminal position obtainer 401 and mobile terminal position transmitter 402.

Communicator 301 receives a video image file, the photographing position information, the destination telephone number, and the effective distance from mobile terminals 100 and 200.

Video image file store 302 stores the video image file received by communicator 301. Database 303 stores video image file table 307 and registered terminal table 308.

In video image file table 307, the storing location of the video image file received by communicator 301 in video image file store 302, and the photographing position information, the effective distance, and the destination telephone number which are received by communicator 301, and an effective date of the video image file are related for each ID. The ID is identification information for specifying the video image file. Meanwhile, the photographing position information and the effective distance are one example of the delivery range information defining the delivery range of the video image file.

FIG. 4A is an explanatory diagram illustrating an example of video image file table 307. In FIG. 4A, video image file table 307 includes ID 41, video image file storing location 42, video image photographing position information (latitude) 43, video image photographing position information (longitude) 44, effective distance 45, destination telephone number 46, and effective date 47.

ID 41 specifies a video image file. Video image file storing location 42 is a location at which a video image file is stored, and indicates the directory in which the video image file is stored.

Video image photographing position information (latitude) 43 indicates the degree of latitude of the position indicated by the photographing position information. Video image photographing position information (longitude) 44 indicates the degree of longitude of the position indicated by the photographing position, information. Meanwhile, the photographing position information is configured with video image photographing position information (latitude) 43 and video image photographing position information (longitude) 44.

Effective distance 45 is the distance for defining the delivery range in which a video image file is delivered. Destination telephone number 46 specifies a mobile terminal delivering a video image file. Meanwhile, when destination telephone number 46 is empty, such a case indicates that a video image file is delivered to the mobile terminal which is previously registered. Effective date 47 indicates a date until which a video image file is delivered.

When destination telephone number 46 is empty, registered terminal table 308 indicates the destination telephone number of the mobile terminal to which a video image file is delivered. Meanwhile, registered terminal table 308 may indicate the plurality of destination telephone numbers.

FIG. 4B is an explanatory diagram illustrating an example of registered terminal table 308. In FIG. 4B, registered terminal table 308 indicates four destination telephone numbers.

Communicator 301 periodically transmits an obtaining instruction for obtaining a current position of a mobile terminal to mobile terminal position managing apparatus 400. Meanwhile, the obtaining instruction includes the destination telephone number of the mobile terminal.

Furthermore, communicator 301 receives position information indicating the current position of a mobile terminal, by issuing an obtaining instruction to mobile terminal instruction it to provide its current position. Hereinafter, the position information will be referred to as current position information.

CPU 304 decides whether or not the current position of a mobile terminal, which is indicated by the current position information, is within a delivery range defined by the delivery range information that is related to the destination telephone number of the mobile terminal in video image file table 307 of database 303. In such a case, CPU 304 uses the circle as the delivery range, whose center is a position indicated by the photographing position information of the delivery range information, and whose radius is the effective distance of the delivery range information.

If CPU 304 decides that the current position of the mobile terminal is within the delivery range, television-phone transmitter 305 delivers a video image file stored in the storing location related to the destination telephone number in video image file table 307 to the mobile terminal. In such a case, television-phone transmitter 305 delivers the video image file by using a television-phone communication method. Specifically, television-phone transmitter 305 converts the video image file to data according to a television-phone communication method, and delivers the converted video image file by using a television-phone communication method.

Generally, in a download-type (pull-type) service, after a download of a video image file was terminated, the video image file is displayed. Therefore, it takes a long time to start looking at and listening to the video image file. On the other hand, in a television-phone communication method, a video image file can be looked at and listened to in real time, so that a user can shorten the time which is taken to start looking at and listening to the video image file.

Memory 306 temporarily records a video image file so that television-phone transmitter 305 can convert the video image file to data according to a television-phone method.

When receiving an obtaining instruction from communicator 301, mobile terminal position obtainer 401 obtains the current position of a mobile terminal, which is instructed by the obtaining instruction.

For example, mobile terminal position obtainer 401 asks the mobile terminal having the destination telephone number included in the obtaining instruction about the current position, and obtains the position information obtained by GPS controller 106 of the mobile terminal. Meanwhile, such a method in which mobile terminal position obtainer 401 obtains a current position of a mobile terminal is not limited to the above method, and can be appropriately changed.

Mobile terminal position transmitter 402 transmits the current position information indicating the current position obtained by mobile terminal position obtainer 401 to video image delivering apparatus 300.

Next, detailed operations of the video image delivering system will be described referring to the flowcharts.

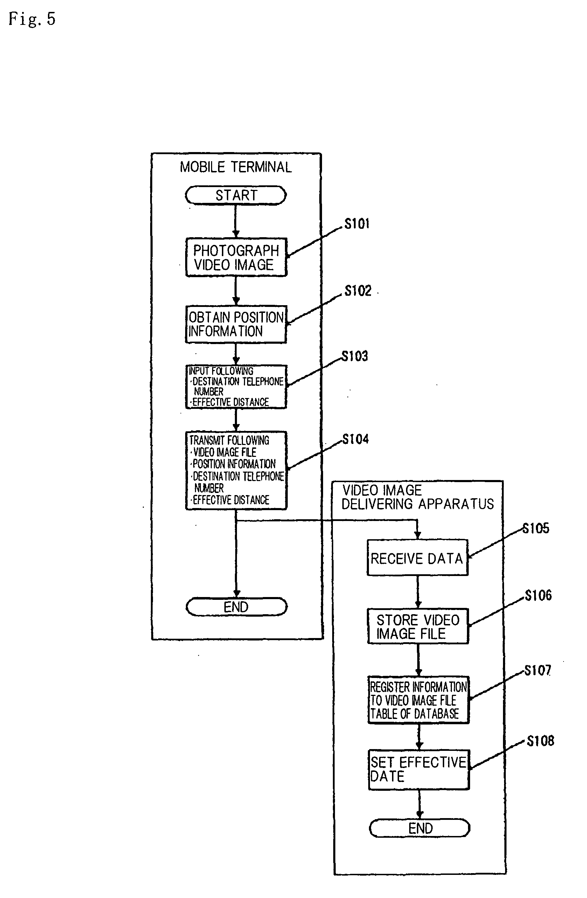

First, an operation for registering a video image file will be described. FIG. 5 is a flowchart describing an example of an operation for registering a video image file.

At step S101, camera 102 of mobile terminal 100 photographs a video image to output the video image data to video image input device 101. After receiving the video image data, video image input device 101 outputs the video image data to video image file generator 105.

Microphone 104 obtains a voice to output the voice data to voice input device 103. When receiving the voice data, voice input device 103 outputs the voice to video image file generator 105.

Video image file generator 105 receives the video image data from video image input device 101, and receives the voice data from voice input device 103. Video image file generator 105 generates a video image file by using the video image data and the voice data. Video image file generator 105 outputs the video image file to CPU 118. When receiving the video image file, CPU 118 records the video image file in memory 117. When terminating step S101, CPU 118 executes step S102.

At step S102, CPU 118 outputs an operation instruction to GPS controller 106. When receiving the operation instruction, GPS controller 106 receives an electric wave from GPS satellite 600 through GPS antenna 107 to obtain a current position based on the electric wave. Meanwhile, the current position is a position at which the video image file is generated.

GPS controller 106 generates the position information (photographing position information) indicating the current position at which to output the photographing position information to CPU 118. When receiving the photographing position information, CPU 118 records the photographing position information in memory 117. Upon terminating step S102, CPU 118 executes step S103.

At step S103, CPU 118 outputs an inputting instruction for inputting the destination telephone number and the effective distance to display controller 113.

Upon receiving the inputting instruction, display controller 113 displays the inputting instruction on display 114.

A user operates operation key 108 to input the destination telephone number and the effective distance depending on the inputting instruction displayed on display 114.

Key input device 109 receives the destination telephone number and the effective distance from operation key 108, and outputs the destination telephone number and the effective distance to CPU 118. CPU 118 records the destination telephone number and the effective distance in memory 117.

In such a case, every time the user operates any key of operation key 108, key input device 109 outputs a detected signal indicating the key to CPU 118.

CPU 118 receives the detected signal. CPU 118 outputs character information assigned to the key indicated by the detected signal to display controller 113, and also, records the character information in memory 117. When receiving the character information, display controller 113 displays the information on display 114. When receiving a detected signal indicating the key to which such a fact is assigned that it is terminated to input the destination telephone number and the effective distance, CPU 118 decides that it has been terminated to input the destination telephone number and the effective distance.

When terminating step S103, CPU 118 executes step S104.

At step S104, CPU 118 obtains a video image file, the photographing position information, the destination telephone number and the effective distance from memory 117, and outputs the video image file, the photographing position information, the destination telephone number and effective distance to wireless communicator 110.

When receiving the video image file, the photographing position information, the destination telephone number and the effective distance, wireless communicator 110 transmits the video image file, the photographing position information, the destination telephone number and the effective distance to communicator 301 of video image delivering apparatus 300 through antenna 111, wireless base station 500 and communication channel 700. When wireless communicator 110 transmits the video image file, the photographing position information, the destination telephone number and the effective distance, mobile terminal 100 terminates the operations.

When receiving the video image file, the photographing position information, the destination telephone number and the effective distance, communicator 301 executes step S105.

At step S105, communicator 301 outputs the video image file, the photographing position information, the destination telephone number and the effective distance to CPU 304. When receiving the video image file, the photographing position information, the destination telephone number and the effective distance, CPU 304 executes step S106.

At step S106, CPU 304 stores the video image file in video image file store 302, and generates a storing location in video image file store 302. When terminating step S106, CPU 304 executes step S107.

At step S107, CPU 304 causes the generated storing location, and the received photographing position information, destination telephone number and effective distance to correspond to each other, and stores them in video image file table 307 in database 303. Upon terminating step S107, CPU 304 executes step S 108.

At step S108, CPU 304 generates an effective date and an ID. For example, CPU 304 measures a current year, month, and day, and adds a predetermined term to the current year, month, and day to generate an effective date. In addition, CPU 304 generates the value as an ID, which is obtained by adding 1 to the largest value in lDs of video image file table 307 stored in database 303.

When generating the effective date and the ID, CPU 304 causes the effective date and the ID for the management to correspond to the storing location, the position information, the destination telephone number and the effective distance which are stored at step S107, and stores them in database 303 to terminate the operations.

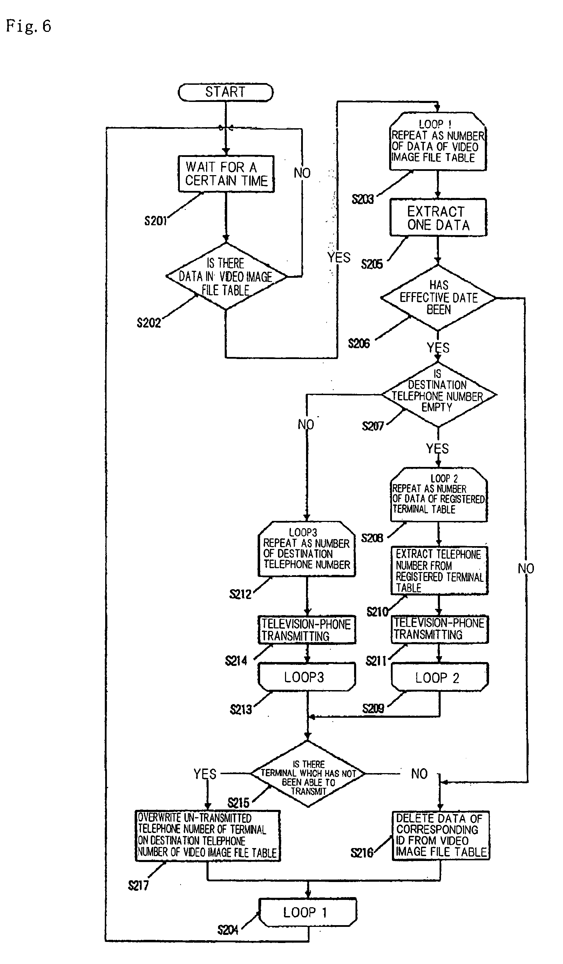

Next, operations of a video image delivering will be described. FIG. 6 is a flowchart describing the operations of the video image delivering.

At step S201, CPU 304 of video image delivering apparatus 300 waits for a certain time. Upon terminating step S201, CPU 304 executes step S202.

At step S202, CPU 304 confirms whether or not video image file table 307 is stored in database 303. If video image file table 307 is stored, CPU 304 executes step S203, and if video image file table 307 is not stored, CPU 304 executes step S201.

At step S203, CPU 304 executes loop 1 processing (step S205 to step S216) for each ID of video image file table 307 stored in database 303. Upon terminating loop 1 processing for ail the IDs (step S204), CPU 304 executes step S201.

Loop 1 processing for each ID will be described below.

At step S205, CPU 304 extracts one management data from video image file table 307 stored in database 303. Meanwhile, the management data designates the ID, the storing location, the photographing position information, the effective distance, the destination telephone number, and the effective distance which correspond to each other.

Upon terminating step S205, CPU 304 executes step S206.

At step S206, CPU 304 checks whether or not the effective date of the management data has expired. If the effective date has not expired, CPU 304 executes step S207, and if the effective date has expired, CPU 304 executes step S216.

At step S207, CPU 304 confirms whether or not there is any destination telephone number of the management data. If there is destination telephone number, CPU 304 executes step S208, and if there is destination telephone number, CPU 304 executes step S212.

At step S208, CPU 304 executes loop 2 processing (step S210 and s211) for each destination telephone number indicated by registered terminal table 308 stored in database 303. When terminating loop 2 processing for all the destination telephone numbers (step S209), CPU 304 executes step S215.

Loop 2 processing for each destination telephone number will be described below.

At step S210, CPU 304 extracts one destination telephone number from registered terminal table 308 stored in database 303. After terminating step S210, CPU 304 executes step S211.

At step S211, CPU 304 executes a television-phone transmission for the destination telephone number. In the television-phone transmission, a video image file is delivered to a telephone terminal of the destination telephone number by using a television-phone communication method.

Returning to the description of loop 1.

At step S212, CPU 304 executes loop 3 processing (step S214) for each extracted destination telephone number in the management data. Upon terminating loop 3 processing for all the destination telephone numbers (step S213), CPU 304 executes step S215.

At step S214 which is loop 3 processing for each destination telephone number, CPU 304 selects one destination telephone number in the management data, and executes a television-phone transmission for the destination telephone number.

Meanwhile, the detailed description of the television-phone transmission executed at steps S211 and S214 will be described later.

Returning to the description of loop 1.

At step S215, CPU 304 confirms whether or not there exists any mobile terminal to which a video image file has not been able to be delivered in the television-phone transmission. Here, the mobile terminal to which a video image file has not been able to be delivered is, for example, a mobile terminal out of the service area of wireless base station 500, a mobile terminal whose electric power is off, and the like.

If there exists any mobile terminal to which a video image file has not been able to be delivered, CPU 304 executes step S217, and if there does not exist any mobile terminal to which a video image file has not been able to be delivered, CPU 304 executes step S216.

At step S216, CPU 304 deletes the extracted management data from video image file table 307 stored in database 303.

At step S217, CPU 304 overwrites the destination telephone number of the mobile terminal, to which the video image file has not been able to be delivered, to the destination telephone number of the extracted management data of video image file table 307 stored in database 303.

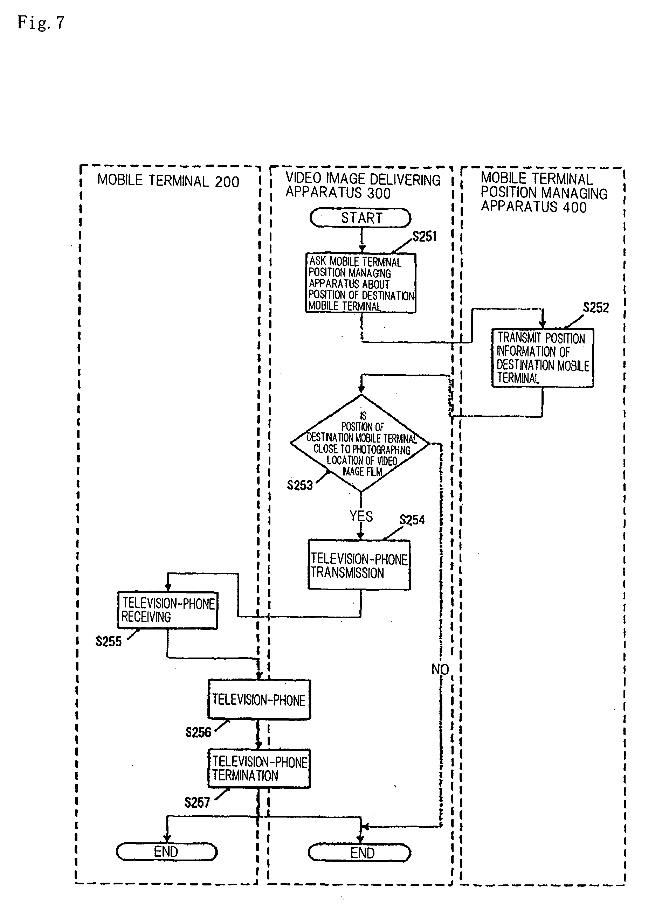

Next, operations of the television-phone transmission executed at steps S211 and s214 will be described. FIG. 7 is a flowchart describing the operations of the television-phone transmission.

At step S251, CPU 304 of video image delivering apparatus 300 generates an obtaining instruction for obtaining the current position of a mobile terminal of the destination telephone number obtained at step S210, or the destination telephone number selected at step S214. CPU 304 outputs the obtaining instruction to communicator 301. Upon receiving the obtaining instruction, communicator 301 transmits the obtaining instruction to mobile terminal position obtainer 401 of mobile terminal position managing apparatus 400 through communication channel 700. When receiving the obtaining instruction, mobile terminal position obtainer 401 executes step S252.

At step S252, mobile terminal position obtainer 401 obtains the current position information indicating the current position of a mobile terminal, which is instructed by the obtaining instruction.

For example, first, mobile terminal position obtainer 401 transmits an inquiry for the current position to a mobile terminal having the destination telephone number included in the obtaining instruction through communication channel 700 and wireless base station 500.

Subsequently, upon receiving the inquiry through antenna 111, wireless communicator 110 of the mobile terminal outputs the inquiry to CPU 118. Upon receiving the inquiry, CPU 118 outputs an operation instruction to GPS controller 106. Upon receiving the operation instruction, GPS controller 106 receives an electric wave through GPS antenna 107 from GPS satellite 600, and obtains the position information indicating the current position based on the electric wave. GPS controller 106 generates the position information (current position information) indicating the current position, and outputs the current position information to CPU 118. Upon receiving the current position information, CPU 118 outputs the current position information to wireless communicator 110.

Upon receiving the current position information, wireless communicator 110 transmits the current position information to mobile terminal position obtainer 401 of mobile terminal position managing apparatus 400 through antenna 111, wireless base station 500, and communication channel 700. Mobile terminal position obtainer 401 obtains current position information by receiving the current position information.

Mobile terminal position obtainer 401 outputs the current position information to mobile terminal position transmitter 402. Upon receiving the current position information, mobile terminal position transmitter 402 transmits the current position information to communicator 301 of mobile terminal position managing apparatus 400 through communication channel 700. Upon receiving the current position information, communicator 301 executes step S253.

At step S253, communicator 301 outputs the current position information to CPU 304. When receiving the current position information, CPU 304 decides whether or not the current position indicated by the current position information is within a delivery range. Specifically, CPU 304 decides whether or not the current position is within a circle whose center is a position indicated by the photographing position information of the management data extracted at step S205, and whose radius is the effective distance of the management data.

If the position is within the delivery range, CPU 304 executes step S254, and if the position is not within the delivery range, CPU 304 terminates the television-phone transmission.

At step S254, CPU 304 obtains a video image file stored in the storing location of the management data from video image file store 302, and records the video image file in memory 306. When recording the video image file in memory 306, CPU 304 outputs the operation instruction and the destination telephone number to television-phone transmitter 305.

When receiving the operation instruction and the destination telephone number, television-phone transmitter 305 converts the video image file recorded in memory 306 to data according to a television-phone communication method. Television-phone transmitter 305 outputs the video image file converted to the data by using a television-phone communication method, and the destination telephone number to communicator 301.

Upon receiving the video image file and the destination telephone number, communicator 301 delivers the video image file in a television-phone method to the mobile terminal of the destination telephone number through communication channel 700 and wireless base station 500. Upon receiving the video image file through antenna 111, wireless communicator 110 of the mobile terminal executes step S255.

Meanwhile, when there are the plurality of destination telephone numbers, communicator 301 transmits the video image file at the same time to each of the mobile terminals of the plurality of destination telephone numbers.

At step S255, wireless communicator 110 outputs the video image file to television-phone controller 112. Upon receiving the video image file, teievision-phone controller 112 executes step S256.

At step S256, television-phone controller 112 obtains a video image data and a voice data from the video image file which is data according to a television-phone communication method. Television-phone controller 112 outputs the video image data to display controller 113, and outputs the voice data to voice output device 115.

Upon receiving the video image data, display controller 113 displays the video image data on display 114. Upon receiving the voice data, voice output device 115 outputs the voice data from speaker 116.

After that, step S257 is executed.

At step S257, when the obtained video image data and voice data reach a terminal end, or when a user takes an action to stop television-phone communication, television-phone controller 112 terminates the communication.

Meanwhile, in the television-phone termination operation, first, the user operates a key to which the television-phone termination is assigned in operation key 108. Key input device 109 detects that the key has been operated, and a signal indicating that the key has been detected to CPU 118. Upon receiving the detected signal, CPU 118 outputs a termination instruction for terminating the television-phone communication to television-phone controller 112 and wireless communicator 110.

Subsequently, when receiving the termination instruction, television-phone controller 112 terminates obtaining video images and voices some. Upon receiving the termination instruction, wireless communicator 110 terminates receiving a video image file.

Next, advantageous effects will be described.

According to the present exemplary embodiment, upon receiving an obtaining instruction from video image delivering apparatus 300, mobile terminal position obtainer 401 obtains the current position of a mobile terminal, which the instruction instructs it to obtain. Mobile terminal position transmitter 402 transmits the current position information indicating the current position to video image delivering apparatus 300. When communicator 301 of video image delivering apparatus 300 receives the current position information, CPU 304 decides whether or not the current position indicated by the current position information is within a delivery range of a video image file. If it is decided that the current position is within the delivery range, television-phone controller 112 delivers the video image file to mobile terminal 200.

In such a case, if the current position of a mobile terminal is included in the delivery range of a video image file, the video image file is delivered to the mobile terminal. Therefore, even if a user does not execute a complicated operation, the user can look at and listen to a video image depending on the current position of the mobile terminal.

In the present exemplary embodiment, television-phone controller 112 transmits the video image file to mobile terminal 200 by using a television-phone communication method.

In such a case, the user can shorten the time which is taken to start looking at and listening to the video image file.

In the present exemplary embodiment, CPU 118 uses a circle as a delivery range, whose center is a position indicated by reference position information, and whose radius is the effective distance.

In such a case, the delivery range can be easily defined.

In the present exemplary embodiment, the reference position information indicates the position in which the video image file is generated.

In such a case, the video image file depending on the position can be registered.

It is preferable that the deliverer delivers the video image file to the mobile terminal by using a television-phone communication method.

Generally, in a video image delivery of a pull-type (download-type), after it is terminated to download a video image file, the video image file is displayed. Therefore, it takes a long time to start looking at and listen to the video image file.

According to the above exemplary embodiment, a video image file is delivered by using a television-phone communication method. Therefore, the time which is taken to start looking at and listening to the video image file, can be shorten,

It is preferable that the data store stores the reference position information and the effective distance as delivery range information, and the controller uses a circle as the delivery range, whose center is a position indicated by the reference position information, and whose radius is the effective distance.

According to the above exemplary embodiment, the delivery range can be easily defined.

It is preferable that the reference position information indicates a position at which the video image file is generated.

According to the above exemplary embodiment, the video image file depending on the position can be registered.

In the above described exemplary embodiments, the illustrated configuration is just an example, and the present invention is not limited to such a configuration.

While preferred embodiments of the present invention have been described using specific terms, such description is for illustrative purposes only, and it is to be understood that changes and variations may be made without departing from the spirit or scope of the following claims.

## Claims

1. A video image delivering apparatus connected to a mobile terminal and to a position managing apparatus for obtaining a current position of the mobile terminal, comprising:
a file storage device that stores a video image file;
a data storage device that stores delivery range information defining a delivery range of the video image file;
a communicator that transmits an obtaining instruction for obtaining a current position of said mobile terminal to said position managing apparatus, and receiving a current position information indicating the current position that is indicated by the obtaining instruction from the position managing apparatus;
a controller that decides whether or not the current position indicated by the current position information is within the delivery range defined by the delivery range information in said data storage device; and
a deliver device that delivers the video image file in said file storage device to the mobile terminal if said controller decides that the current position is within the delivery range.

2. The video image delivering apparatus according to claim 1,
wherein said deliver device delivers the video image file to the mobile terminal by using a television-phone communication method.

3. The video image delivering apparatus according to claim 1 ,
wherein said data storage device stores reference position information and effective distance as the delivery range information, and
said controller uses a circle as the delivery range, a center of which is a position indicated by the reference position information, and a radius of which is the effective distance.

4. The video image delivering apparatus according to claim 3,
wherein the reference position information indicates a position at which the video image file is generated.

5. A video image delivering system including a video image delivering apparatus connected to a mobile terminal, and a position managing apparatus connected to the mobile terminal and the video image delivering apparatus,
wherein said position managing apparatus includes:
a obtain device that obtains a current position instructed by an obtaining instruction when the obtaining instruction for obtaining the current position of said mobile terminal is received from the video image delivering apparatus; and
a transmit device that transmits a current position information indicating the current position obtained by said obtain device to the video image delivering apparatus, and
the video image delivering apparatus includes:
a file storage device that stores the video image file;
a data storage device that stores delivery range information defining a delivery range of the video image file;
a communication device that transmits the obtaining instruction to the position managing apparatus, and receives the current position information from the position managing apparatus;
a controller that decides whether or not the current position indicated by the current position information is within the delivery range defined by the delivery range information in said data storage device; and
a deliver device that delivers the video image file in the file storage device to the mobile terminal if said controller decides that the current position is within the delivery range.

6. A video image delivering method executed by a video image delivering apparatus including a file storage device that storages a video image file and a data storage device that stores delivery range information defining a delivery range of the video image file, and connected to a mobile terminal and a position managing apparatus for obtaining a current position of the mobile terminal, comprising:
transmitting an obtaining instruction for obtaining the current position of the mobile terminal to the position managing apparatus;
receiving current position information indicating the current position instructed by the obtaining instruction from the position managing apparatus;
deciding whether or not the current position indicated by the current position information is within the delivery range defined by the delivery range information in said data storage device; and
delivering the video image file in said file storage device to the mobile terminal if it is decided that the current position is within the delivery range.

7. The video image delivering method according to claim 6,
wherein in the delivering includes delivering the video image file to the mobile terminal by using a television-phone communication method.

8. The video image delivering method according to claim 6,
wherein said data storage device stores reference position information and effective distance as the delivery range information, and
in the deciding the delivery range, a circle is used, a center of which is a position indicated by the reference position information, and a radius of which is the effective distance.

9. The video image delivering method according to claim 8,
wherein the reference position information indicates a position in which the video image file is generated.

10. A video image delivering method executed by a video image delivering system including a video image delivering apparatus including a file storage device for storing a video image file and a data storage device for storing delivery range information defining a delivery range of the video image file, and connected to a mobile terminal, and a position managing apparatus connected to the mobile terminal and the video image delivering apparatus, comprising:
transmitting an obtaining instruction for obtaining a current position of the mobile terminal by the video image delivering apparatus;
receiving the obtaining instruction from the video image delivering apparatus by the position managing apparatus;
obtaining the current position instructed by the obtaining instruction by the position managing apparatus;
transmitting current position information indicating the obtained current position to the video image delivering apparatus by the position managing apparatus;
receiving the current position information from the position managing apparatus by the video image delivering apparatus;
deciding whether or not the current position indicated by the current position information is within the delivery range defined by the delivery range information in the data storage device; and
delivering the video image file in the file storage device to the mobile terminal if it is decided that the current position is within the delivery range.
